# EUROPÄISCHE PATENTSCHRIFT

(11) **EP 1 034 975 B1**
(45) Veröffentlichungstag und Bekanntmachung des Hinweises auf die Patenterteilung: **09.11.2005**
(21) Anmeldenummer: 00101828.2
(22) Anmeldetag: 29.01.2000
(51) Int. Cl.: B60N 2/20

(54) **Fahrzeugsitz**
Vehicle seat
Siège de véhicule

(30) Priorität: 08.03.1999 DE 19910083
(43) Veröffentlichungstag der Anmeldung: 13.09.2000
(73) Patentinhaber: DaimlerChrysler AG, 70567 Stuttgart (DE)
(72) Erfinder: Drew, Mike, Wavendon MK17 8AJ (GB); Schmidt, Bernd, 72218 Wildberg (DE); Schrom, Ralf-Henning, 72108 Rottenburg (DE); Schulz, Volkmar, 96479 Weitransdorf (DE)

(56) Entgegenhaltungen:
- DE-A- 3 801 294
- GB-A- 940 100
- US-A- 5 224 750

## Beschreibung

Die Erfindung betrifft einen Sitz für ein Kraftfahrzeug, insbesondere für einen Personenkraftwagen.

Ein derartiger, der DE 38 01 294 A1 entnehmbarer Beifahrersitz für einen Omnibus umfaßt karosseriefeste vordere Gestellbeine, an denen ein Sitzelement schwenkbar angelagert ist. Außerdem ist ein Lehnenelement schwenkbar am Sitzelement gelagert. Um den Eingangsbereich des Omnibusses zum Ein und Ausstieg freigeben zu können, ist der Sitz zwischen einer Verriegelungsposition, in welcher das Sitzelement und das Lehnenelement zum ordnungsgemäßen Sitzen verwendbar sind, und einer Entriegelungsposition verstellbar, in welcher das Sitzelement und das Lehnenelement im Fahrzeug bezüglich der Fahrtrichtung nach vorn verstellt sind. Um die Vorverlagerung des Sitzes zu erleichtern, sind zwischen den vorderen Gestellbeinen und dem Sitzelement Dämpfermittel in Form von Gasdruckfedern vorgesehen. Bei der Rückverlagerung des Sitzes von seiner Entriegelungsposition in seine Verriegelungsposition wirken diese Dämpfermittel der Rückstellbewegung des Sitzes entsprechend dämpfend entgegen.

Da bei diesem bekannten Sitz sowohl die Rückenlehne als auch das Sitzelement verlagert und in der entsprechenden Stellung lagegesichert werden müssen, ist ein aufwendiger Verriegelungsmechanismus für die Rückenlehne und das Sitzelement nötig. Ein solch komplexer Verriegelungsmechanismus erfordert einen relativ hohen Bedien- und Kontrollaufwand, beispielsweise zur Sicherstellung, ob der Sitz in der Gebrauchsstellung ordnungsgemäß verriegelt ist.

Ein weiterer, ähnlicher Sitz ist aus der US 5 224 750 A bekannt.

Aus der GB 940 100 A ist ein Sitz bekannt, bei dem die Rückkehr von der Entriegelungsposition in die Verriegelungs position nur in der Endphase durch ein elastisches Element gedämpft wird.

Aus der DE 41 36 363 A1 ist ein Rücksitz für ein Kraftfahrzeug bekannt, der aus einer Gebrauchsstellung in eine Nichtgebrauchsstellung bewegbar ist. Hierzu wird das Sitzelement um eine am entfernt von der Rückenlehne liegenden Ende angeordnete Schwenkachse verschwenkt, bevor die Rückenlehne um eine in deren unterem Bereich vorgesehene Schwenkachse in eine waagerechte Lage gebracht werden kann. Das Sitzelement und die Rückenlehne sind über Gasdruckfedern miteinander verbunden, die den Bewegungen des Sitzes von der Gebrauchsstellung in die Nichtgebrauchsstellung - und umgekehrt - dämpfend entgegenwirken.

Schließlich ist aus der DE 39 34 171 C2 sowie aus der DE 38 13 594 A1 ein Sitz bekannt, der ein Sitzelement und ein daran gelagertes Lehnenelement aufweist. Üblicherweise ist ein derartiger Sitz außerdem mit einem Basiselement ausgestattet, das im Kraftfahrzeug befestigbar ist und an dem das Sitzelement gelagert ist. Die bekannten Sitze sind zwischen einer Verriegelungsposition und einer Entriegelungsposition verstellbar, wobei in der Verriegelungsposition das Sitzelement und das Lehnenelement für einen Fahrzeuginsassen zum ordnungsgemäßen Sitzen verwendbar sind, während in der Entriegelungsposition das Lehnenelement im Fahrzeug bezüglich der Fahrtrichtung soweit nach vorn verstellt ist, daß ein bezüglich der Fahrtrichtung hinter dem Sitz angeordneter Raum, z.B. der Fondraum, zum Beladen bzw. Entladen, insbesondere zum Einsteigen bzw. Aussteigen von Fondinsassen, zugänglich ist. Um den Sitz zwischen seiner Verriegelungsposition und seiner Entriegelungsposition verstellen zu können, ist hierbei das Lehnenelement am Sitzelement schwenkgelagert.

Bei den zuletzt genannten Sitzen sind zwischen dem Lehnenelement und dem Sitzelement Federmittel in Form eines elastischen Bauteiles angeordnet, insbesondere ein weichelastischer Puffer bzw. ein als Gummiteil oder Weichplastikteil ausgebildetes druckelastisches Elastomerteil. Diese Federmittel dienen dazu, in der Verriegelungsposition des Sitzes das Lehnenelement gegenüber dem Sitzelement derart zu verspannen, daß Relativbewegungen zwischen diesen Elementen und somit eine Geräuschentwicklung verhindert wird.

Aufgabe der vorliegenden Erfindung ist es, unter Beibehaltung der komfortabel gedämpften Rückverstellung des Sitzes den Bedienungsaufwand bei der Zurückverlagerung des Sitzes in seine Verriegelungsposition zu reduzieren.

Diese Aufgabe wird erfindungsgemäß durch einen Sitz mit den Merkmalen des Anspruchs 1 gelöst. Vorteilhafte Ausführungsformen mit zweckmäßigen Weiterbildungen der Erfindung sind in den Unteransprüchen angegeben.

Bei dem Sitz nach der Erfindung wird dessen Rückstellbewegung zur Komfortsteigerung während einer Endphase bis zum Erreichen der Verriegelungsposition gedämpft. Durch diese Maßnahme wird während der Sitzrückverstellung die kinetische Energie des Sitzes in Reibungs- bzw. Wärmeenergie umgewandelt, wobei die Dämpfungswirkung, d.h. die der Rückstellbewegung entgegenwirkenden Dämpferkräfte von der Geschwindigkeit der Rückstellbewegung abhängen, so dass höhere Rückstellgeschwindigkeiten entsprechend größere Dämpferkräfte zur Folge haben. Die entsprechenden Sitzbauteile, z.B. ein Verriegelungsmechanismus, werden dadurch geschont; insbesondere kann dadurch auch die Betriebssicherheit des Fahrzeuges verbessert werden. Je größer die Endphase der Rückstellbewegung, d.h. der durch die Dämpfermittel gedämpfte Anteil des Rückstellweges, desto kleiner ist die kinetische Energie des Sitzes und um so besser kann ein schwungvolles Einschlagen des Sitzes in seine Verriegelungsposition durch die erfindungsgemäßen Dämpfermittel verhindert werden.

Darüber hinaus sind bei dem Sitz nach der Erfindung die Dämpfermittel so dimensioniert, daß sich der Sitz bei der Rückstellbewegung aufgrund seiner Gewichtskraft selbsttätig in seine Verriegelungsposition verstellt. Hierdurch verringert sich der Bedienungsaufwand des Sitzes, da eine Kontrolle des Fahrgastes, ob der Sitz seine verriegelte Gebrauchsstellung erreicht hat, entfällt. Dies ist insbesondere dann von Bedeutung, wenn der Sitz über eine selbsttätig arbeitende Verriegelungseinrichtung verfügt, die den Sitz sichert, sobald dieser seine Verriegelungsposition erreicht.

Entsprechend einer bevorzugten Ausführungsform können die als Kolben-Zylinder-Aggregat ausgebildeten Dämpfermittel als Gasdruckfeder oder Öldruckdämpfer ausgebildet sein. Mit Hilfe derartiger, an sich bekannter Dämpfermittel kann die gedämpfte Endphase der Rückstellbewegung besonders groß ausgebildet werden. Darüber hinaus sind derartige Dämpfermittel relativ preiswert, haben sich in der Praxis bewährt und sind relativ einfach für die am Sitz zu beherrschenden Kräfte auslegbar.

Bei einer Weiterbildung des erfindungsgemäßen Sitzes können Verriegelungsmittel vorgesehen sein, die den Sitz bei Erreichen seiner Verriegelungsstellung selbsttätig verriegeln. Diese Verriegelungsmittel können dann einen Schwenkbügel aufweisen, der zwischen einer Halteposition, in der er mit einem Bügelteil einen durch die Verstellbewegung des Sitzes zwischen dessen Verriegelungsposition und Entriegelungsposition zwangsläufig mitverstellten Vorsprung übergreift, und einer Freigabeposition um eine Schwenkwelle schwenkverstellbar ist, in der er den Vorsprung freigibt. Die in diesem Fall als Kolben-Zylinder-Aggregat ausgebildeten Dämpfermittel können sich dann zum Dämpfen der Rückstellbewegung zwischen dem Bügelteil des in seiner Freigabeposition befindlichen Bügels und der Schwenkwelle hindurcherstrecken und am Vorsprung abstützen. Durch diese Vorschläge ergibt sich eine kompakte Bauweise, die außerdem günstige Hebelverhältnisse für die Krafteinleitung des Dämpfers ermöglicht.

Weitere wichtige Merkmale und Vorteile des erfindungsgemäßen Sitzes ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele sind in den Zeichnungen dargestellt und werden in der nachfolgenden Beschreibung näher erläutert.

Es zeigen, jeweils schematisch,
- Fig. 1: eine stark vereinfachte Seitenansicht auf einen erfindungsgemäß ausgebildeten Sitz,
- Fig. 2: eine Detailansicht auf den erfindungsgemäßen Sitz im Bereich einer Verriegelungseinrichtung, wobei sich der Sitz in einer Verriegelungsposition befindet, und
- Fig. 3: eine Ansicht wie in Fig. 2, jedoch mit dem Sitz in einer Entriegelungsposition.

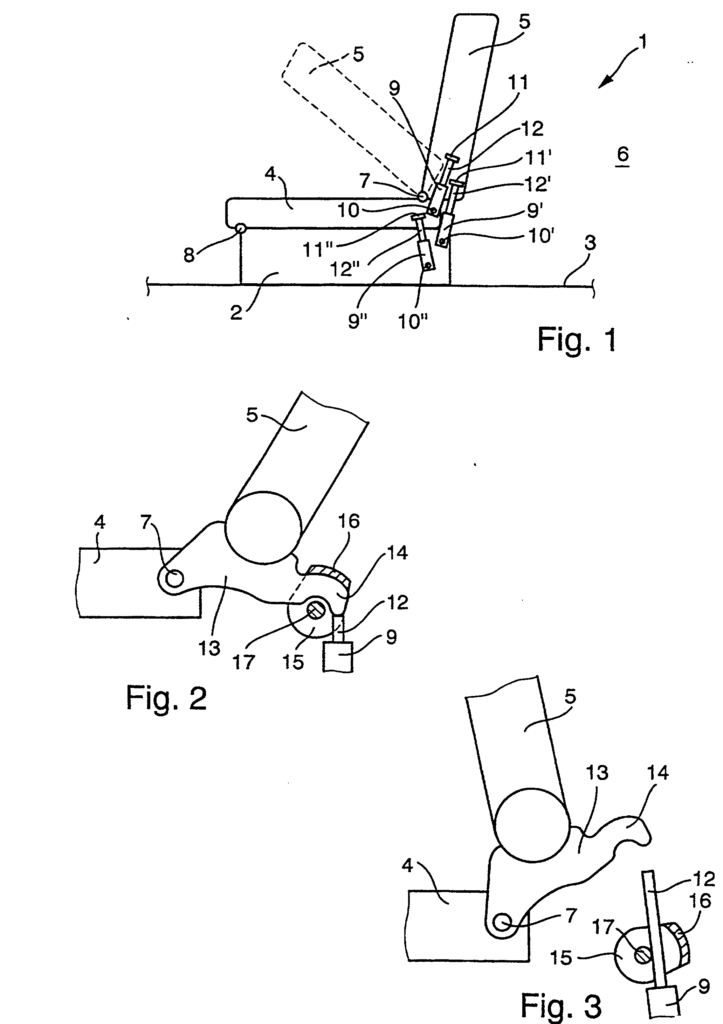

Entsprechend Fig. 1 weist ein Fahrzeugsitz 1, insbesondere ein Vordersitz eines Personenkraftwagens, ein Basiselement 2 auf, das an einem Fahrzeugboden 3 eines im übrigen nicht dargestellten Fahrzeuges befestigt ist. Der Sitz 1 weist außerdem ein Sitzelement 4 auf, das in herkömmlicher Weise am Basiselement 2 gelagert bzw. gehaltert ist. Außerdem weist der Sitz 1 ein Lehnenelement 5 auf, das ebenfalls in überlicher Weise am Sitzelement 4 gelagert bzw. gehaltert ist.

Um beispielsweise bei einem zweitürigen Personenkraftwagen einen bezüglich der Fahrtrichtung hinter dem Sitz 1 befindlichen Fondraum 6 zugänglich zu machen, kann der Sitz 1 zwischen einer in Fig. 1 mit durchgezogenen Linien dargestellten Verriegelungsposition, in welcher der Sitz 1 in der dafür vorgesehenen Weise von einem Fahrzeuginsassen zum Sitzen verwendet werden kann, und einer Entriegelungsposition verstellt werden, in welcher beispielsweise das Lehnenelement 5 auf das Sitzelement 4 zu schwenkverstellt ist, was in Fig. 1 mit unterbrochenen Linien dargestellt ist. Das Lehnenelement 5 ist zu diesem Zweck bei 7 in herkömmlicher Weise am Sitzelement 4 schwenkgelagert. Bei einer anderen Ausführungsform kann der Sitz 1 seine Entriegelungsposition auch dadurch einnehmen, daß das Sitzelement 4 in Fahrtrichtung nach vorn verschwenkt wird, wozu das Sitzelement 4 beispielsweise bei 8 am Basiselement 2 schwenkgelagert sein kann. Ebenso ist eine Kombination aus einer Schwenkverstellung des Sitzelementes 4 und einer Schwenkverstellung des Lehnenelementes 5 möglich. Zusätzlich kann das Basiselement 2 eine Verstellung des Sitzes 1 in Fahrtrichtung ermöglichen, um den Zugang zum Fondraum 6 zusätzlich zu verbessern.

Es ist klar, daß am Sitz 1 bzw. am Fahrzeugboden 3 eine geeignete Verriegelungseinrichtung vorgesehen ist, die den Sitz 1 in seiner Verriegelungsposition am Fahrzeugboden 3 verankert.

Insbesondere wird durch eine derartige Verriegelungseinrichtung das Lehnenelement 5 am Sitzelement 4 oder am Basiselement 2 und/oder das Sitzelement 4 am Basiselement 2 eingerastet. Da derartige Verrieglungseinrichtungen hinreichend bekannt sind, wird hier auf eine Beschreibung derselben verzichtet. Außerdem sind sie in Fig. 1 zur Wahrung der Übersichtlichkeit nicht dargestellt.

Der erfindungsgemäße Sitz 1 ist außerdem mit einem Dämpfermittel 9 ausgestattet, das hier als Kolben-Zylinder-Aggregat, insbesondere als Gasdruckfeder oder als Öldruckdämpfer, ausgebildet ist. Die Gasdruckfeder 9 ist am Sitzelement 4 bei 10 angelenkt und stützt sich an einem am Lehnenelement 5 ausgebildeten Anlageteil 11 ab. Während einer Endphase einer den Sitz 1 bzw. das Lehnenelement 5 von der Entriegelungsposition in die Verriegelungsposition überführenden Rückstellbewegung wirkt dabei eine Kolbenstange 12 des Kolben-Zylinder-Aggregates 9 mit dem Anlageteil 11 zusammen. Das Dämpfermittel 9 ist dabei so angeordnet, daß es dieser Rückstellbewegung entgegenwirkende Dämpferkräfte vom Sitzelement 4 auf das Lehnenelement 5 überträgt, wodurch das Lehnenelement 5 entsprechend der Dämpfung abgebremst wird.

Je nach der gewählten Bauart des Sitzes 1 kann entsprechend einer anderen Ausführungsform ein Dämpfermittel 9' bei 10' auch am Basiselement 2 angelenkt sein und sich mit seiner Kolbenstange 12' an einem Anlageteil 11' ebenfalls an dem Lehnenelement 5 abstützen. Hierbei dämpft das Dämpfermittel 9' Schwenkverstellungen um die Lager 7 und/oder 8. Bei einer weiteren Ausführungsform kann ein Dämpfermittel 9" bei 10" ebenfalls am Basiselement 2 gelagert sein, sich jedoch mit seiner Kolbenstange 12" an einem Anlageteil 11" abstützen, das dann am Sitzelement 4 ausgebildet ist. Hierbei dämpft das Dämpfermittel 9" Schwenkverstellungen um das Lager 8.

Durch die Rückstellbewegung des Sitzes 1 bzw. hier des Lehnenelmentes 5 wird das Dämpfermittel 9 von einem Anfangszustand, in dem seine Kolbenstange 12 maximal ausgefahren ist, in einen Endzustand verstellt, in dem die Kolbenstange 12 maximal eingefahren ist. Die Dämpfermittel 9 können hier nicht dargestellte Federmittel aufweisen bzw. mit Federmitteln zusammenwirken, deren Federkräfte parallel zu den Dämpferkräften der Dämpfermittel 9 wirken, wobei die Federmittel mit den Dämpfermitteln 9 gekoppelt sind, derart, daß die Federmittel die Dämpfermittel 9 in deren Anfangszustand vorspannen.

Entsprechend den Fig. 2 und 3 wird bei einer anderen Ausführungsform des erfindungsgemäßen Sitzes 1 ebenfalls das Lehnenelement 5 gegenüber dem Sitzelement 4 verschwenkt, um den Sitz 1 zwischen seiner in Fig. 2 dargestellten Verriegelungsposition und seiner in Fig. 3 dargestellten Entriegelungsposition zu verstellen. Zur Schwenklagerung des Lehnenelementes 5 ist dieses mit einem entsprechenden Beschlagteil 13 ausgestattet, das bei 7 am Sitzelement 4 schwenkgelagert ist. Am Beschlagteil 13 ist in einem vom Lager 7 abgewandten Bereich ein entgegen der Fahrtrichtung fingerartig abstehender Vorsprung 14 ausgebildet, der einen Teil einer Verriegelungseinrichtung des Sitzes 1 bildet. Der Vorsprung 14 wirkt zum Verriegeln des Sitzes 1 bzw. des Lehnenelementes 5 in der Verriegelungsposition mit einem Schwenkbügel 15 zusammen, derart, daß ein Bügelteil 16 des Schwenkbügels 15 den Vorsprung 14 übergreift, wobei der Schwenkbügel 15 eine Halteposition einnimmt.

Zur Freigabe des Sitzes 1 bzw. des Lehnenelementes 5 wird der Schwenkbügel 15 um eine Schwenkwelle 17 in eine in Fig. 3 wiedergegebene Freigabeposition schwenkverstellt.

Bei dieser Ausführungsform ist das Dämpfermittel 9 besonders raumsparend angeordnet. Die Kolbenstange 12 des als Dämpfermittel wirkenden Kolben-Zylinder-Aggregates 9 erstreckt sich zwischen der Schwenkwelle 17 und dem Bügelteil 16 hindurch, solange der Schwenkbügel 15 seine Freigabeposition einnimmt. Während der Rückverstellung des Sitzes 1 bzw. des Lehnenelementes 5 kommt der Vorsprung 14 mit dem axial freien Ende der Kolbenstange 12 in Kontakt, so daß sich das Lehnenelement 5 am Dämpfermittel 9 abstützen kann. Die Kontaktstelle zwischen Kolbenstange 12 und Vorsprung 14 ist vorzugsweise so gewählt, daß das Lehnenelement 5 in dieser Phase der Rückstellbewegung noch keine allzu große kinetische Energie aufgenommen hat, so daß vom Dämpfermittel 9 keine besonders großen Kräfte aufgenommen werden müssen. Das Dämpfermittel 9 ist dabei so dimensioniert, daß die Gewichtskraft des Sitzes bzw. hier des Lehnenelementes 5 ausreicht, um die Rückstellbewegung bis zur Verriegelungsposition durchzuführen. Während dieser Rückstellbewegung fährt die Kolbenstange 12 in das beispielsweise als Gasdruckfeder ausgebildete Dämpfermittel 9 ein. Sobald der Sitz 1 bzw. das Lehnenelement 5 die Verriegelungsposition erreicht, bewirken nicht dargestellte Bestandteile der Verriegelungseinrichtung ein selbsttätiges Verschwenken des Schwenkbügels 15 in dessen Halteposition, um die Verriegelungsposition des Sitzes 1 formschlüssig zu sichern.

Solange sich der Vorsprung 14 außerhalb des Schwenkbügels 15 befindet, kann sich die Kolbenstange 12 zwischen Schwenkwelle 17 und Bügelteil 16 erstrecken, wodurch der Schwenkbügel 15 in seiner Freigabeposition gesichert ist.

## Patentansprüche

1. Sitz für ein Kraftfahrzeug, insbesondere Personenkraftwagen, mit einem Basiselement (2), das im Kraftfahrzeug befestigbar ist, mit einem Sitzelement (4), das am Basiselement (2) gelagert ist, und mit einem Lehnenelement (5), das am Sitzelement (4) gelagert ist,
- wobei der Sitz (1) zwischen einer Verriegelungsposition, in welcher das Sitzelement (4) und das Lehnenelement (5) zum ordnungsgemäßen Sitzen verwendbar sind, und einer Entriegelungsposition verstellbar ist, in welcher das Sitzelement (4) und/oder das Lehnenelement (5) im Fahrzeug bezüglich der Fahrtrichtung soweit nach vorn verstellt sind, daß ein bezüglich der Fahrtrichtung hinter dem Sitz (1) angeordneter Raum (6) zum Be- und Entladen, insbesondere zum Ein- und Aussteigen, zugänglich ist,
- wobei zum Verstellen zwischen der Verriegelungsposition und der Entriegelungsposition das Sitzelement (4) am Basiselement (2) und/oder das Lehnenelement (5) am Sitzelement (4) schwenkgelagert ist,
- wobei Dämpfermittel (9) vorgesehen sind, die einer Rückstellbewegung des Sitzes (1) von seiner Entriegelungsposition in seine Verriegelungsposition dämpfend entgegenwirken,
- wobei die Dämpfermittel (9) so dimensioniert sind, dass sich der Sitz (1) bei der Rückstellbewegung aufgrund seiner Gewichtskraft selbsttätig in seine Verriegelungsposition verstellt,
- wobei die Rückstellbewegung des Sitzes (1) während einer Endphase bis zum Erreichen der Verriegelungsposition gedämpft ist,
- wobei die Dämpfermittel als Kolben-Zylinder-Aggregat (9) ausgebildet sind.

2. Sitz nach Anspruch 1,
**dadurch gekennzeichnet,**
**dass** das Kolben-Zylinder-Aggregat als Gasdruckfeder oder als Öldruckdämpfer (9) ausgebildet ist.

3. Sitz nach Anspruch 1 oder 2,
**dadurch gekennzeichnet,**
**dass** die Dämpfermittel (9) durch die Dämpfung von einem Anfangszustand in einen Endzustand verstellt werden und daß die Dämpfermittel (9) Federmittel aufweisen, die parallel zu den Dämpferkräften wirkende Federkräfte erzeugen, welche die Dämpfermittel (9) in deren Anfangszustand vorspannen.

4. Sitz nach einem der Ansprüche 1 bis 3,
**dadurch gekennzeichnet,**
**dass** sich die Dämpfermittel (9) während der Endphase der Rückstellbewegung am Basiselement (2) und am Sitzelement (4) oder am Basiselement (2) und am Lehnenelement (5) oder am Sitzelement (4) und am Lehnenelement (5) abstützen.

5. Sitz nach einem der Ansprüche 1 bis 4,
**dadurch gekennzeichnet,**
**dass** die Dämpfermittel (9) am Basiselement (2) montiert sind und sich zur Dämpfung am Sitzelement (4) oder am Lehnenelement (5) abstützen oder daß die Dämpfermittel (9) am Lehnenelement (5) montiert sind und sich zur Dämpfung am Sitzelement (4) oder am Basiselement (2) abstützen oder dass die Dämpfermittel (9) am Sitzelement (4) montiert sind und sich zur Dämpfung am Lehnenelement (5) oder am Basiselement (2) abstützen.

6. Sitz nach einem der Ansprüche 1 bis 5,
**dadurch gekennzeichnet,**
**dass** Verriegelungsmittel (14,15,16,17) vorgesehen sind, die den Sitz (1) bei Erreichen seiner Verriegelungsstellung selbsttägig verriegeln, daß diese Verriegelungsmittel einen Schwenkbügel (15) aufweisen, der zwischen einer Halteposition, in der er mit einem Bügelteil (16) einen durch die Verstellbewegung des Sitzes (1) zwischen dessen Verriegelungsposition und dessen Entriegelungsposition zwangsläufig mitverstellten Vorsprung (14) übergreift, und einer Freigabeposition um eine Schwenkwelle (17) schwenkverstellbar ist, in der er den Vorsprung (14) freigibt, und daß die Dämpfermittel als Kolben-Zylinder-Aggregat (9) ausgebildet sind, das sich zum Dämpfen der Rückstellbewegung zwischen dem Bügelteil (16) des in seiner Freigabeposition befindlichen Bügels (15) und der Schwenkwelle (17) hindurcherstreckt und sich am Vorsprung (14) abstützt.

## Claims

1. Seat for a motor vehicle, in particular a passenger car, with a base element (2) that can be fixed in the motor vehicle, with a seat element (4) mounted on the base element (2), and with a backrest element (5) mounted on the seat element (4),
- such that the seat (1) can be adjusted between a locked position in which the seat element (4) and the backrest element (5) can be used for ordinary sitting, and an unlocked position in which the seat element (4) and/or the backrest element (5) in the vehicle can be tilted far enough forward in the direction of travel to make a space (6), behind the seat (1) in relation to the direction of travel, accessible for loading and unloading, and in particular for getting in and out,
- such that for adjustment between the locked and unlocked positions the seat element (4) is hinged onto the base element (2) and/or the backrest element (5) is hinged onto the seat element (4),
- damper means (9) being provided, which have a damping counteraction on the return movement of the seat (1) from its unlocked to its locked position,
- the damper means (9) being sized such that in its return movement the seat (1) resumes its locked position under its own weight,
- the return movement of the seat (1) being damped during a final phase until the locked position has been reached,
- and the damper means are configured as a piston-cylinder aggregate (9).

2. Seat according to Claim 1,
**characterised in that**
the piston-cylinder aggregate is made as a gas-pressure spring or as an oil-pressure damper (9).

3. Seat according to Claims 1 or 2,
**characterised in that**
the damper means (9) are moved by the damping action from an initial condition to a final condition, and the damper means (9) comprise spring means which produce spring forces acting parallel to the damper forces, which pre-stress the damper means (9) in their initial condition.

4. Seat according to any of Claims 1 to 3,
**characterised in that**
during the final phase of the return movement, the damper means (9) are in contact with the base element (2) and the seat element (4), or with the base element (2) and the backrest element (5), or with the seat element (4) and the backrest element (5).

5. Seat according to any of Claims 1 to 4,
**characterised in that**
the damper means (9) are mounted on the base element (2) and make contact with the seat element (4) or the backrest element (5) for the damping action, or the damper means (9) are mounted on the backrest element (5) and make contact with the seat element (4) for the damping action, or the damper means (9) are mounted on the seat element (4) and make contact with the backrest element (5) or the base element (2) for the damping action.

6. Seat according to any of Claims 1 to 5,
**characterised in that**
locking means (14, 15, 16, 17) are provided which, when the seat (1) reaches its locked position, automatically lock it, these locking means consisting of a detent (15) which can swivel around a pivot rod (17) between a holding position in which a part (16) of the detent engages with a projection (14) that is moved along with the seat (1) when the latter is adjusted between its locked and unlocked positions, and a release position in which it disengages from the projection (14), and the damper means are configured as a piston-cylinder aggregate (9) which, to damp the return movement, extends between the part (16) of the detent (15) in its release position, past the pivot rod (17), and makes contact with the projection (14).

## Revendications

1. Siège de véhicule automobile, en particulier de voiture particulière, avec un élément de base (2) qui peut être fixé dans le véhicule automobile, avec un élément d'assise (4) qui est installé sur l'élément de base (2) et avec un élément de dossier (5) qui est installé sur l'élément d'assise (4),
- le siège (1) étant déplaçable entre une position de verrouillage, dans laquelle l'élément d'assise (4) et l'élément de dossier (5) permettent une position d'assise correcte d'un occupant, et une position de déverrouillage, dans laquelle l'élément d'assise (4) et/ou l'élément de dossier (5) sont déplacés suffisamment loin à l'intérieur du véhicule vers le côté situé à l'avant du véhicule par rapport à la direction de déplacement de celui-ci qu'un compartiment (6) situé derrière le siège (1) par rapport à la direction de déplacement du véhicule soit accessible pour le chargement et pour le déchargement, en particulier pour la montée dans le véhicule ou pour la descente de celui-ci,
- l'élément d'assise (4) étant installé de manière pivotante sur l'élément de base (2) et/ou l'élément de dossier (5) étant installé de manière pivotante sur l'élément d'assise (4) afin de permettre le déplacement entre la position de verrouillage et la position de déverrouillage,
- des moyens amortisseurs (9) qui amortissent un mouvement de retour du siège (1) depuis sa position de déverrouillage jusqu'à sa position de verrouillage étant prévus,
- les moyens amortisseurs (9) étant dimensionnés de telle façon que, lors du mouvement de retour, le siège (1) se déplace automatiquement dans sa position de verrouillage par la force exercée par son propre poids,
- le mouvement de retour du siège (1) étant amorti au cours d'une phase finale jusqu'à ce que la position de verrouillage soit atteinte et
- les moyens amortisseurs étant configurés comme dispositif à piston et à cylindre (9).

2. Siège selon la revendication 1, **caractérisé en ce que** le dispositif à piston et à cylindre est configuré comme ressort à pression de gaz ou comme amortisseur à pression d'huile (9).

3. Siège selon la revendication 1 ou 2, **caractérisé en ce que** l'effet d'amortissement déplace les moyens amortisseurs (9) d'un état initial jusque dans un état final et **en ce que** les moyens amortisseurs (9) sont munis de ressorts générant des forces d'expansion qui agissent parallèlement aux forces d'amortissement et qui mettent les moyens amortisseurs (9) en précontrainte dans leur état initial.

4. Siège selon l'une quelconque des revendications 1 à 3, **caractérisé en ce que**, lors de la phase finale du mouvement de retour, les moyens amortisseurs (9) s'appuient sur l'élément de base (2) et sur l'élément d'assise (4) ou sur l'élément de base (2) et sur l'élément de dossier (5) ou sur l'élément d'assise (4) et sur l'élément de dossier (5).

5. Siège selon l'une quelconque des revendications 1 à 4, **caractérisé en ce que** les moyens amortisseurs (9) sont montés sur l'élément de base (2) et s'appuient sur l'élément d'assise (4) ou sur l'élément de dossier (5) pour assurer l'amortissement ou **en ce que** les moyens amortisseurs (9) sont montés sur l'élément de dossier (5) et s'appuient sur l'élément d'assise (4) ou sur l'élément de base (2) pour assurer l'amortissement ou **en ce que** les moyens amortisseurs (9) sont montés sur l'élément d'assise (4) et s'appuient sur l'élément de dossier (5) ou sur l'élément de base (2) pour assurer l'amortissement.

6. siège selon l'une quelconque des revendications 1 à 5, **caractérisé en ce que** sont prévus des éléments de verrouillage (14, 15, 16, 17) qui verrouillent automatiquement le siège (1) lorsque sa position de verrouillage est atteinte, **en ce que** ces éléments de verrouillage comprennent un étrier pivotant (15) qui peut être déplacé de manière pivotante autour d'un arbre de pivotement (17) entre une position de maintien, dans laquelle il passe au moyen d'une partie d'étrier (16) par-dessus une avancée (14) qui est obligatoirement déplacée en même temps lors du mouvement de déplacement du siège (1) entre sa position de verrouillage et sa position de déverrouillage, et une position de libération, dans laquelle il libère l'avancée (14), et **en ce que** les moyens amortisseurs sont configurés comme dispositif à piston et à cylindre (9) qui, pour assurer l'amortissement du mouvement de retour, s'étend entre la partie d'étrier (16) de l'étrier (15) se trouvant dans sa position de libération et l'arbre de pivotement (17) et qui s'appuie sur l'avancée (14).
